# EUROPEAN PATENT APPLICATION

(11) **EP 3 604 946 A1**
(43) Date of publication of application: **05.02.2020**
(21) Application number: 17924795.2
(22) Date of filing: 30.10.2017
(51) Int. Cl.: F24F 11/00

(54) **CONTROL METHOD AND SYSTEM FOR MULTI-SPLIT AIR CONDITIONER, AND COMPUTER READABLE STORAGE MEDIUM**

(30) Priority: 18.09.2017 CN 201710846768
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: XU, Yongfeng, Foshan Guangdong 528311 (CN); LI, Hongwei, Foshan Guangdong 528311 (CN); XIONG, Meibing, Foshan Guangdong 528311 (CN); JIANG, Yunpeng, Foshan Guangdong 528311 (CN)
(74) Representative: RGTH
(86) International application number: PCT/CN2017/108416
(87) International publication number: WO 2019/051947

(57) **Abstract**

A method for controlling a multi-split air conditioner. The method comprises: detecting whether the degree of superheat of an outdoor unit meets a target requirement (S10); if yes, determining whether a difference value between an average exhaust temperature of the outdoor unit and the average exhaust temperature of an outdoor unit system reaches a preset value (S20); if yes, comparing the average exhaust temperature of the outdoor unit with the average exhaust temperature of the outdoor unit system (S30); reducing operating frequency of a compressor of the outdoor unit if the average exhaust temperature of the outdoor unit is greater than the average exhaust temperature of the outdoor unit system; and increasing the operating frequency of the compressor of the outdoor unit if the average exhaust temperature of the outdoor unit is less than the average exhaust temperature of the outdoor unit system (S40). The method resolves the problem in the multi-split air conditioner system of excessively high or excessively low exhaust temperature of the compressor of the outdoor unit due to uneven refrigerant distribution, and improves the reliability of the multi-split air conditioner system. Also disclosed are a multi-split air conditioner system (100) and a computer readable storage medium (101).

## Description

### CROSS-REFERENCE TO RELATED APPLICATIONS

The present application is based on and claims priority to Chinese patent application number 201710846768.4, filed on September 18, 2017, the entire disclosure of which is hereby incorporated by reference.

### TECHNICAL FIELD

The present disclosure relates to the field of air conditioner technology, and in particular, to a control method of a multi-split air conditioner, a multi-split air conditioning system and a computer readable storage medium.

### BACKGROUND

During a practical using process, multi-split air conditioning units, especially multi-split units in parallel, are affected by the installation position, installation pipelines, spacing and drop between outdoor units, and the like, and it is prone to uneven distribution of refrigerant between compressors inside the outdoor units, causing the outdoor unit to operate abnormally, and a compressor with a large amount of refrigerant may have return liquid, a compressor with a low amount of refrigerant may have a high exhaust temperature, and the compressor may be worn out due to lack of oil, and the compressor may be damaged or destroyed in a serious situation.

### SUMMARY

One embodiment of the present disclosure is to provide a control method of a multi-split air conditioner, a multi-split air conditioning system, and a computer readable storage medium, which are intended to solve a problem of excessively high or excessively low exhaust temperature of a compressor inside an outdoor unit in the multi-split air conditioner system.

In one embodiment, the present disclosure provides a control method of a multi-split air conditioner. The multi-split air conditioner includes an outdoor unit and the outdoor unit includes at least one compressor; and the control method of the multi-split air conditioner includes steps of:
detecting whether an overheat degree of the outdoor unit meets a target requirement;
in response to determining that the overheat degree of the outdoor unit meets the target requirement, determining whether a difference value between an average exhaust temperature of the outdoor unit and an average exhaust temperature of an outdoor unit system reaches a preset value;
in response to determining that the difference value between the average exhaust temperature of the outdoor unit and the average exhaust temperature of the outdoor unit system reaches the preset value, comparing the average exhaust temperature of the outdoor unit with the average exhaust temperature of the outdoor unit system;
reducing an operating frequency of a compressor of the outdoor unit in response to determining that the average exhaust temperature of the outdoor unit is greater than the average exhaust temperature of the outdoor unit system, and increasing the operating frequency of the compressor of the outdoor unit in response to determining that the average exhaust temperature of the outdoor unit is less than the average exhaust temperature of the outdoor unit system.

In one embodiment, reducing the operating frequency of the compressor of the outdoor unit in response to determining that the average exhaust temperature of the outdoor unit is greater than the average exhaust temperature of the outdoor unit system includes:
in response to determining that the average exhaust temperature of the outdoor unit is greater than the average exhaust temperature of the outdoor unit system, determining whether a current operating frequency of the compressor of the outdoor unit is greater than a minimum operating frequency of the compressor of the outdoor unit;
in response to determining that the current operating frequency of the compressor of the outdoor unit is greater than the minimum operating frequency, reducing the operating frequency of the compressor of the outdoor unit.

In one embodiment, after determining whether the current operating frequency of the compressor of the outdoor unit is greater than the minimum operating frequency of the compressor of the outdoor unit, the method further includes:
in response to determining that the current operating frequency of the compressor of the outdoor unit is less than or equal to the minimum operating frequency of the compressor, determining whether an operating frequency of the compressor of the outdoor unit whose average exhaust temperature is less than the average exhaust temperature of the outdoor unit system is greater than a maximum operating frequency of the compressor of the outdoor unit whose average exhaust temperature is less than the average exhaust temperature of the outdoor unit system;
in response to determining that the operating frequency of the compressor of the outdoor unit whose average exhaust temperature is less than the average exhaust temperature of the outdoor unit system is less than the maximum operating frequency, increasing the operating frequency of the compressor of the outdoor unit.

In one embodiment, increasing the operating frequency of the compressor of the outdoor unit in response to determining that the average exhaust temperature of the outdoor unit is less than the average exhaust temperature of the outdoor unit system includes:
in response to determining that the average exhaust temperature of the outdoor unit is less than the average exhaust temperature of the outdoor unit system, determining whether a current operating frequency of the compressor of the outdoor unit is less than a maximum operating frequency of the compressor of the outdoor unit;
in response to determining that the current operating frequency of the compressor of the outdoor unit is less than the maximum operating frequency, increasing the operating frequency of the compressor of the outdoor unit.

In one embodiment, after determining whether the current operating frequency of the compressor of the outdoor unit is less than the maximum operating frequency of the compressor of the outdoor unit, the method further includes:
in response to determining that the current operating frequency of the compressor of the outdoor unit is greater than or equal to the maximum operating frequency, determining whether an operating frequency of a compressor of the outdoor unit whose average exhaust temperature is greater than the average exhaust temperature of the outdoor unit system is greater than a minimum operating frequency of the compressor of the outdoor unit whose average exhaust temperature is greater than the average exhaust temperature of the outdoor unit system;
in response to determining that the operating frequency of the compressor of the outdoor unit whose average exhaust temperature is greater than the average exhaust temperature of the outdoor unit system is greater than the minimum operating frequency, reducing the operating frequency of the compressor of the outdoor unit.

In one embodiment, detecting whether the overheat degree of the outdoor unit meets the target requirement includes:
acquiring an exhaust temperature of the outdoor unit;
acquiring a lowest exhaust temperature in the outdoor units according to comparison of acquired exhaust temperatures;
detecting whether the overheat degree of the outdoor unit corresponding to the lowest exhaust temperature meets the target requirement.

In one embodiment, determining whether the difference value between the average exhaust temperature of the outdoor unit and the average exhaust temperature of the outdoor unit system reaches the preset value includes:
acquiring the average exhaust temperature of the outdoor unit and the average exhaust temperature of the outdoor unit system;
acquiring an absolute value of the difference value between the average exhaust temperature of the outdoor unit and the average exhaust temperature of the outdoor unit system according to the average exhaust temperature of the outdoor unit and the average exhaust temperature of the outdoor unit system;
determining whether the absolute value reaches a preset value.

In one embodiment, the method further includes:
acquiring an exhaust temperature of a compressor of the outdoor unit;
determining whether the exhaust temperature of the compressor of the outdoor unit is within a preset range;
in response to determining that the exhaust temperature of the compressor of the outdoor unit exceeds the preset range, issuing a fault signal.

In one embodiment, the present disclosure also provides a multi-split air conditioning system comprising an outdoor unit. The outdoor unit includes at least one compressor. The outdoor unit further includes a reversing valve, an outdoor heat exchanger, a gas-liquid separator, an electronic expansion valve, a high pressure shutoff valve, and a low pressure shutoff valve connected on a pipeline of the outdoor unit. The multi-split air conditioning system further includes: a memory, a processor, and a control program of a multi-split air conditioner stored on the memory and executable on the processor, which when executed by the processor, performs the steps of the method as described above.

In one embodiment, the present disclosure further provides a computer readable storage medium. The computer readable storage medium has a control program of a multi-split air conditioner stored thereon, and the control program of the multi-split air conditioner, when executed by the processor, performs the steps of the control method of the multi-split air conditioner as described above.

The control method of the multi-split air conditioner of the present disclosure determines whether the overheat degree of the outdoor unit meets the target requirement. When the overheat degree of the outdoor unit meets the target requirement, it is determined whether the difference value between the average exhaust temperature of the outdoor unit and the average exhaust temperature of the outdoor unit system reaches the preset value. When the difference value between the average exhaust temperature of the outdoor unit and the average exhaust temperature of the outdoor unit system reaches the preset value, the average exhaust temperature of the outdoor unit is compared with the average exhaust temperature of the outdoor unit system. When the average exhaust temperature of the outdoor unit is greater than the average exhaust temperature of the outdoor unit system, the operating frequency of the compressor of the outdoor unit is reduced. When the average exhaust temperature of the outdoor unit is less than the average exhaust temperature of the outdoor unit system, the operating frequency of the compressor of the outdoor unit is increased. With the method of the embodiment, a problem of excessively high or excessively low exhaust temperature of the compressor of the outdoor unit due to uneven refrigerant distribution in the multi-split air conditioner system is resolved, improving the reliability of the multi-split air conditioner system.

### DRAWINGS

Figure 1 is a schematic structural diagram of a multi-split air conditioning system of the present disclosure.
Figure 2 is a schematic flow chart of a control method of a multi-split air conditioner according to a first embodiment of the present disclosure;
Figure 3 is a schematic flow chart of a control method of a multi-split air conditioner according to a second embodiment of the present disclosure;
Figure 4 is a schematic flow chart of a control method of a multi-split air conditioner according to a third embodiment of the present disclosure;
Figure 5 is a schematic flow chart of a control method of a multi-split air conditioner according to a fourth embodiment of the present disclosure;
Figure 6 is a schematic flow chart of a control method of a multi-split air conditioner according to a fifth embodiment of the present disclosure;
Figure 7 is a schematic flow chart of a control method of a multi-split air conditioner according to a fifth embodiment of the present disclosure;
Figure 8 is a block diagram of a multi-split air conditioning system of the present disclosure.

The implementation of the object, functional features, and advantages of the present disclosure will be further described in conjunction with the embodiments with reference to the drawings.

### DETAILED DESCRIPTION

It is understood that the specific embodiments described herein are merely illustrative of the present disclosure and are not intended to limit the disclosure.

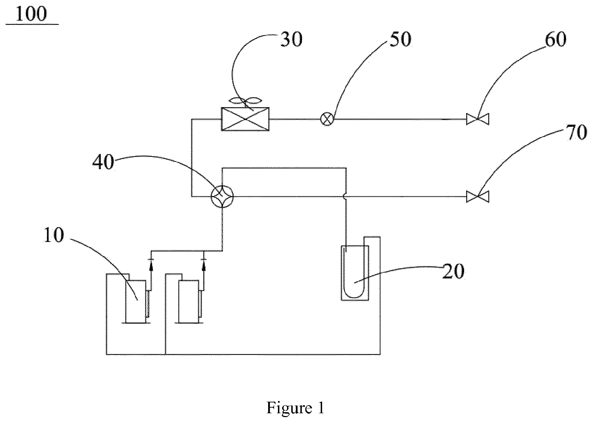

The present disclosure provides a control method of a multi-split air conditioner. The method is applied to a multi-split air conditioning system. The multi-split air conditioning system includes an outdoor unit and an indoor unit in parallel with the outdoor unit. The indoor unit and the outdoor unit are in series with one-to-one correspondence. Pipeline structure of the outdoor unit includes a gas-liquid separator 20, a compressor unit, an outdoor heat exchanger 30, a reversing valve 40, an electronic expansion valve 50, a high pressure shutoff valve 60, and a low pressure shutoff valve 70. The reversing valve is a four-way valve. A connection manner of the outdoor unit pipeline is a conventional connection manner in the art, as shown in Figure 1, and thus details are not described herein again.

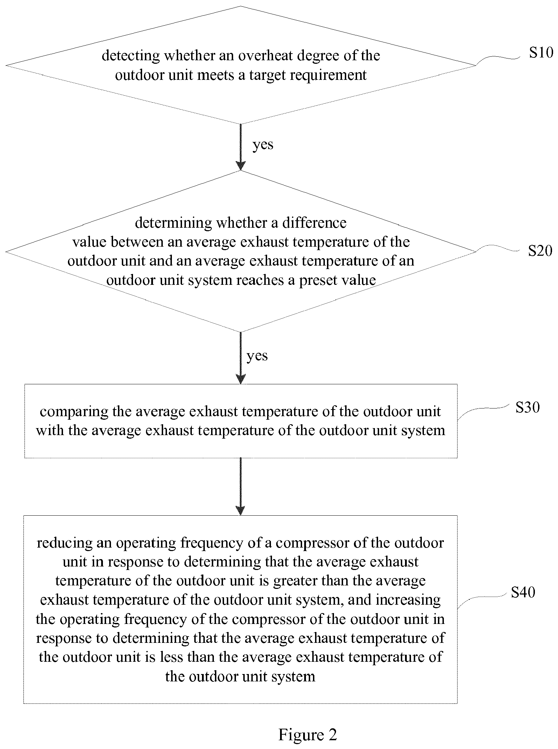

In a first embodiment, as illustrated in Figure 2, the control method of the multi-split air conditioner includes following steps:
At S10, it is detected whether an overheat degree of the outdoor unit meets a target requirement.

In this embodiment, firstly, it is detected whether the overheat degree of the outdoor unit meets the target requirement to determine whether a compressor of the outdoor unit is in a normal operating state. When the overheat degree of the outdoor unit is greater than a target value, the too high overheat degree of the outdoor unit may be caused by different resistance of the pipeline through which the refrigerant flows or different loads of the indoor unit causing the compressor of the outdoor unit in an overloaded state. At this time, the flux of the refrigerant may be adjusted first to make the overheat degree of the outdoor unit meets the target value. Secondly, when the overheat degree of the outdoor unit is less than the target value, it may be caused by the refrigerant flowing into the compressor in a gas-liquid two-phase state, causing damage to the compressor. Therefore, the flux of the refrigerant for the compressor may be firstly reduced, to prevent the refrigerant from flowing into the compressor in the gas-liquid two-phase state and causing damage to the entire system. Only when the overheat degree of the outdoor unit meets the target requirement, the next step is continued. Otherwise, the overheat degree of the compressor may be adjusted first to make it meet the target requirement.

At S20, when the overheat degree of the outdoor unit meets the target requirement, it is determined whether a difference value between an average exhaust temperature of the outdoor unit and an average exhaust temperature of the outdoor unit system reaches a preset value.

When the overheat degree of the outdoor unit meets the target requirement, it is further determined whether the difference value between the average exhaust temperature of the outdoor unit and the average exhaust temperature of the outdoor unit system reaches the preset value. The preset value may be set as needed. When the difference value between the average exhaust temperature of the outdoor unit and the average exhaust temperature of the outdoor unit system is less than the preset value, it indicates that the average exhaust temperature of the outdoor unit at this time is not much different from the average exhaust temperature of the outdoor unit system, and is within an acceptable fluctuation range, then it is not necessary to adjust the operation of the outdoor unit at this time. However, when the difference value between the average exhaust temperature of the outdoor unit and the average exhaust temperature of the outdoor unit system exceeds the preset value, it indicates that the average exhaust temperature of the outdoor unit at this time is deviated too much from the average exhaust temperature of the outdoor unit system, and it may affect normal operation of the outdoor unit, so measures need to be taken to adjust exhaust temperature of the outdoor unit to make the average exhaust temperature of the outdoor unit approaching the average exhaust temperature of the outdoor unit system.

At S30, when the difference value between the average exhaust temperature of the outdoor unit and the average exhaust temperature of the outdoor unit system reaches the preset value, the average exhaust temperature of the outdoor unit is compared with the average exhaust temperature of the outdoor unit system.

It is further determined whether the average exhaust temperature of each of the outdoor units is greater than the average exhaust temperature of the outdoor unit system. It should be noted that, determining whether the average exhaust temperature of each of the outdoor units is greater than the average exhaust temperature of the outdoor unit system is to separately compare the average exhaust temperature of each outdoor unit with the average exhaust temperature of the outdoor unit system, and the determination for each outdoor unit is independent.

The average exhaust temperature of each of the outdoor units is an average value of exhaust temperatures of compressors inside each of the outdoor units. For example, there are three outdoor units, and the average exhaust temperatures of the three outdoor units are set to be TP1, TP2, and TP3, each outdoor unit includes two compressors, and the exhaust temperatures of the compressors are TP1C1, TP1C2, TP2C1, TP2C2, TP3C1, and TP3C2, respectively, then the average exhaust temperatures of the three outdoor units are TP1=(TP1C1+TP1C2)/2, TP2=(TP2C1+TP2C2)/2, and TP3=(TP3C1+TP3C2)/2. The average exhaust temperature of the outdoor unit system is an average value of the average exhaust temperatures of the three outdoor units. The average exhaust temperature of the outdoor unit system is set as TP, then TP=(TP1+TP2+TP3)/3.

At S40, when the average exhaust temperature of the outdoor unit is greater than the average exhaust temperature of the outdoor unit system, operating frequency of the compressor of the outdoor unit is reduced, and when the average exhaust temperature of the outdoor unit is less than the average exhaust temperature of the outdoor unit system, the operating frequency of the compressor of the outdoor unit is increased.

Further, when the average exhaust temperature of the outdoor unit is greater than the average exhaust temperature of the entire outdoor unit system, it indicates that this outdoor unit has less refrigerant at this time, and then the exhaust temperature of the compressor in the outdoor unit can be reduced by reducing the operating frequency of the compressor at this time.

It should be noted that when the number of outdoor units is one or multiple, specific control methods are as follows.

When the number of the outdoor units is one and the number of compressors inside the outdoor unit is multiple, the average exhaust temperature of the outdoor unit is equal to the average exhaust temperature of the outdoor unit system. At this time, an average exhaust temperature of the compressors of the outdoor unit can be directly determined, and the exhaust temperature of each compressor can be compared with the average exhaust temperature of the compressors. When the exhaust temperature of the compressor is greater than the average exhaust temperature, the operating frequency of the compressor is reduced to decrease the exhaust temperature of the compressor. When the exhaust temperature of the compressor is less than the average exhaust temperature of the compressors, the operating frequency of the compressor is increased to increase the operating frequency of the compressor.

When the number of the outdoor units is multiple, the multiple outdoor units constitute the outdoor unit system at this time. Then the average exhaust temperature of each of the outdoor units is compared with the average exhaust temperature of the outdoor unit system first. When an average exhaust temperature of a certain outdoor unit is greater than the average exhaust temperature of the entire outdoor unit system, operating frequencies of all of the compressors of the outdoor unit is controlled to be reduced. When an average exhaust temperature of a certain outdoor unit is less than the average exhaust temperature of the entire outdoor unit system, the operating frequencies of all of the compressors of the outdoor unit is controlled to be increased.

When the average exhaust temperature of the outdoor unit is less than the average exhaust temperature of the entire outdoor unit system, it indicates that the outdoor unit has more refrigerant at this time, and then the exhaust temperature of the compressor in the outdoor unit can be increased by increasing the operating frequency of the compressor.

In this embodiment, by detecting whether the overheat degree of an outdoor unit meets the target requirement, when the overheat degree of the outdoor unit meets the target requirement, it is determined whether the difference value between the average exhaust temperature of the outdoor unit and the average exhaust temperature of the outdoor unit system reaches the preset value; when the difference value between the average exhaust temperature of the outdoor unit and the average exhaust temperature of the outdoor unit system reaches the preset value, the average exhaust temperature of the outdoor unit is compared with the average exhaust temperature of the outdoor unit system; when the average exhaust temperature of the outdoor unit is greater than the average exhaust temperature of the outdoor unit system, the operating frequency of the compressor of the outdoor unit is reduced; and when the average exhaust temperature of the outdoor unit is less than the average exhaust temperature of the outdoor unit system, the operating frequency of the compressor of the outdoor unit is increased. With the method of the embodiment, the problem of excessively high or excessively low exhaust temperature of the compressor of the outdoor unit in the multi-split air conditioner system due to uneven refrigerant distribution is resolved, and the reliability of the multi-split air conditioner system is improved.

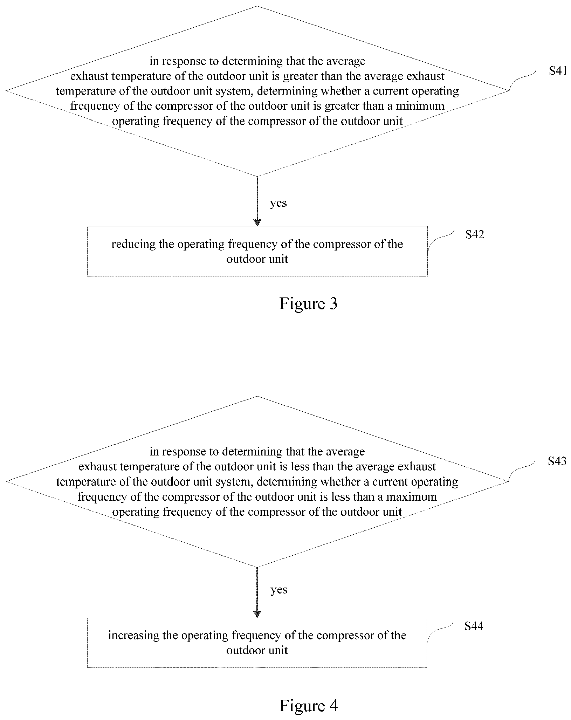

Further, as illustrated in Figure 3, in a second embodiment of a control method of a multi-split air conditioner according to the present disclosure, the action at S40 includes follows.
At S41, when the average exhaust temperature of the outdoor unit is greater than the average exhaust temperature of the outdoor unit system, it is determined whether a current operating frequency of the compressor of the outdoor unit is greater than a minimum operating frequency of the compressor of the outdoor unit.
At S42, when the current operating frequency of the compressor of the outdoor unit is greater than the minimum operating frequency, the operating frequency of the compressor of the outdoor unit is reduced.

In this embodiment, when the average exhaust temperature of the compressor of the outdoor unit is greater than the average exhaust temperature of the outdoor unit system, it is further determined whether the current operating frequency of the compressor of the outdoor unit is greater than the minimum operating frequency. When the current operating frequency of the compressor of the outdoor unit reaches its minimum operating frequency that can be reached, it indicates that the compressor of the outdoor unit can no longer reduce its operating frequency at this time. Therefore, it is possible to continue to control the operating frequency of the compressor to reduce only when the current operating frequency of the compressor of the outdoor unit has not reached the minimum operating frequency.

Therefore, when it is detected that the current operating frequency of the compressor of the outdoor unit has not reached the minimum operating frequency, the compressor of the outdoor unit is controlled to reduce the operating frequency from the current operating frequency, to reduce the exhaust temperature of the compressor.

In this embodiment, when the average exhaust temperature of the outdoor unit is greater than the average exhaust temperature of the outdoor unit system, it is determined whether the current operating frequency of the compressor of the outdoor unit is greater than its minimum operating frequency; when the current operating frequency of the compressor of the outdoor unit is greater than its minimum operating frequency, the operating frequency of the compressor of the outdoor unit is reduced. The accuracy of the controlling the operating frequency of the compressor of the outdoor unit is improved, and the entire system is also protected.

In another embodiment, after the action at S41, the method further includes follows.
At S410, when the current operating frequency of the compressor of the outdoor unit is less than or equal to the minimum operating frequency of the compressor, it is determined whether an operating frequency of the compressor of the outdoor unit whose average exhaust temperature is less than the average exhaust temperature of the outdoor unit system is greater than a maximum operating frequency of the compressor of the outdoor unit whose average exhaust temperature is less than the average exhaust temperature of the outdoor unit system.
At S420, when the operating frequency of the compressor of the outdoor unit whose average exhaust temperature is less than the average exhaust temperature of the outdoor unit system is less than the maximum operating frequency, the operating frequency of the compressor of the outdoor unit is increased.

In this embodiment, when the current operating frequency of the compressor of the outdoor unit reaches the minimum operating frequency that can be reached, the compressor can no longer continue to reduce its operating frequency. At this time, the stability of the entire system can be controlled by changing the operating frequency of other compressors. In one embodiment, it can be determined whether the operating frequency of the compressor of the outdoor unit whose average exhaust temperature is less than or equal to the average exhaust temperature of the outdoor unit system is greater than its maximum operating frequency, the operating frequency of the compressor is increased when the operating frequency of this compressor is less than its maximum operating frequency.

Of course, it should be noted that when there are a plurality of compressors in the outdoor unit, when it is determined that the average exhaust temperature of the outdoor unit is less than or equal to the average exhaust temperature of the outdoor unit system, it is further determined the operating frequency of the compressors inside the outdoor unit. At this time, an arbitrary compressor may be selected for determination, or one of the plurality of compressors may be set to have priority for determination. When the operating frequency of the specified compressor is greater than its maximum operating frequency, determination is continued to be performed on the operating frequency of a next compressor, and so on.

In this embodiment, when the current operating frequency of the compressor of the outdoor unit is less than or equal to the minimum operating frequency of the compressor, the operating frequency of the current compressor cannot be directly controlled at this time, therefore, by switching to control the operating frequencies of other compressors with low exhaust temperature in this embodiment, the stability of the entire system is controlled and the adaptability of the control is improved.

Further, as illustrated in Figure 4, in a third embodiment of a control method of a multi-split air conditioner according to the present disclosure, the action at step S40 includes follows.
At S43, when the average exhaust temperature of the outdoor unit is less than the average exhaust temperature of the outdoor unit system, it is determined whether the current operating frequency of the compressor of the outdoor unit is less than its maximum operating frequency.
At S44, when the current operating frequency of the compressor of the outdoor unit is less than its maximum operating frequency, the operating frequency of the compressor of the outdoor unit is increased.

In this embodiment, when the average exhaust temperature of the compressor of the outdoor unit is less than the average exhaust temperature of the outdoor unit system, it is further determined whether the current operating frequency of the compressor of the outdoor unit is less than its maximum operating frequency. When the current operating frequency of the compressor of the outdoor unit reaches its maximum operating frequency that can be reached, it indicates that the compressor of the outdoor unit can no longer increase its operating frequency. Therefore, it is possible to continue to control the operating frequency of the compressor to increase only when the current operating frequency of the compressor of the outdoor unit has not reached the maximum operating frequency.

Therefore, when it is detected that the current operating frequency of the compressor of the outdoor unit has not reached the maximum operating frequency, the compressor of the outdoor unit is controlled to increase the operating frequency from the current operating frequency, to increase its exhaust temperature.

In this embodiment, when the average exhaust temperature of the outdoor unit is less than the average exhaust temperature of the outdoor unit system, it is determined whether the current operating frequency of the compressor of the outdoor unit is less than its maximum operating frequency, when the current operating frequency of the compressor of the outdoor unit is less than its maximum operating frequency, the operating frequency of the compressor of the outdoor unit is increased. The accuracy of controlling the operating frequency of the compressor of the outdoor unit is improved, and the entire system is also protected.

In another embodiment, after the action at S43, the method further includes follows.
At S431, when the current operating frequency of the compressor of the outdoor unit is greater than or equal to its maximum operating frequency, it is determined whether an operating frequency of a compressor of the outdoor unit whose average exhaust temperature is greater than the average exhaust temperature of the outdoor unit system is greater than the minimum operating frequency.
At S432, when the operating frequency of the compressor of the outdoor unit whose average exhaust temperature is greater than the average exhaust temperature of the outdoor unit system is greater than the minimum operating frequency, the operating frequency of the compressor of the outdoor unit is reduced.

In this embodiment, when the current operating frequency of the compressor of the outdoor unit reaches its maximum operating frequency that can be reached, the compressor can no longer continue to increase its operating frequency. At this time, the stability of the entire system can be controlled by changing the operating frequencies of other compressors. In one embodiment, it can be determined whether the operating frequency of the compressor of the outdoor unit whose average exhaust temperature is greater than or equal to the average exhaust temperature of the outdoor unit system is greater than its minimum operating frequency. The operating frequency of the compressor is reduced when the operating frequency of the compressor is greater than its minimum operating frequency.

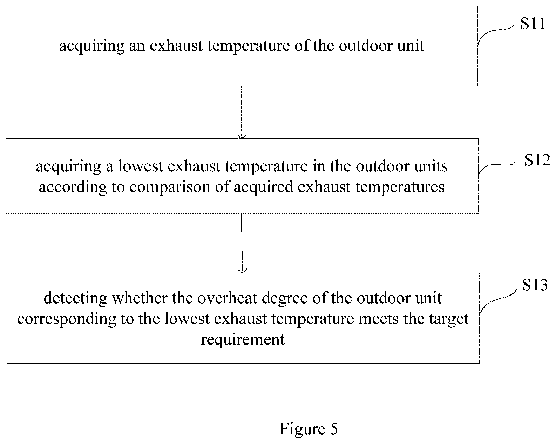

Further, as illustrated in Figure 5, in a fourth embodiment of a control method of a multi-split air conditioner according to the present disclosure, the foregoing action at S10 includes follows.
At S11, an exhaust temperature of each of the outdoor units is acquired.
At S12, a lowest exhaust temperature in all the outdoor units is acquired according to comparison of acquired exhaust temperatures.
At S13, it is detected whether the overheat degree of the outdoor unit corresponding to the lowest exhaust temperature meets the target requirement.

In this embodiment, by acquiring the exhaust temperature of each of the outdoor units, the lowest exhaust temperature among all exhaust temperatures is obtained according to the comparison of acquired exhaust temperatures, and then, it is determined whether the overheat degree of the outdoor unit corresponding to the lowest exhaust temperature meets the target requirement. When the overheat degree of the outdoor unit corresponding to the lowest exhaust temperature can meet the target requirement, it indicates that the overheat degrees of the outdoor units corresponding to other exhaust temperatures that are greater than the lowest exhaust temperature can also meet the target requirement. Therefore, it is only necessary to determine whether the overheat degree of the outdoor unit corresponding to the lowest exhaust temperature meats the target requirement.

It should be noted that the above-mentioned acquiring the exhaust temperature of each of the outdoor units refers to an average value of the exhaust temperatures of all compressors of each of the outdoor units, and the lowest exhaust temperature is acquired from the comparison of the exhaust temperatures of all the outdoor units.

In this embodiment, by acquiring the lowest exhaust temperature among the exhaust temperatures of all the outdoor units, and determining whether the overheat degree of the outdoor unit corresponding to the lowest exhaust temperature meets the target requirement, when the overheat degree of the outdoor unit corresponding to the lowest exhaust temperature meets the target requirement, it can be determined that the overheat degrees of other outdoor units can meet the target requirement. It is not necessary to perform determination on the overheat degrees of all the outdoor units, improving the operation efficiency.

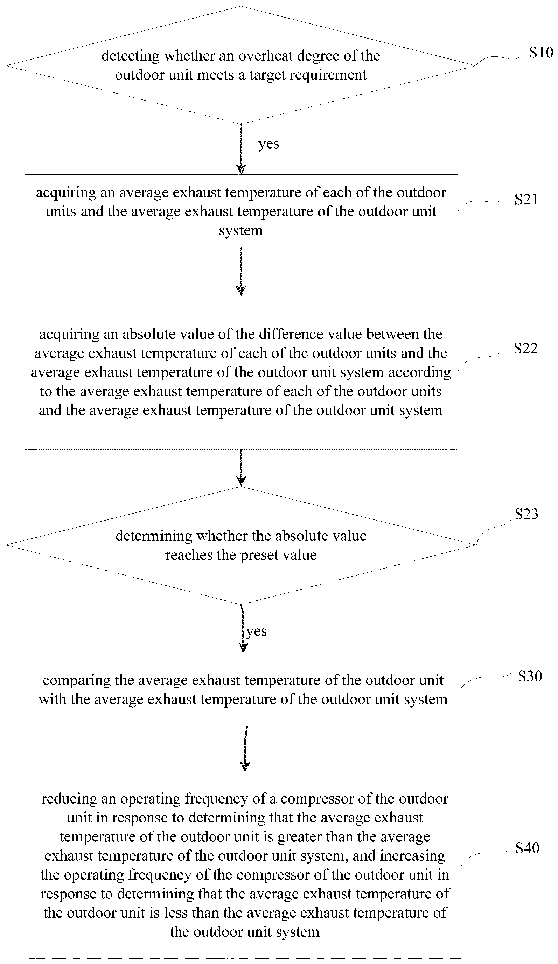

Further, as illustrated in Figure 6, in a fifth embodiment of a control method of a multi-split air conditioner according to the present disclosure, the action at S20 includes follows.

At S21, the average exhaust temperature of each of the outdoor units and the average exhaust temperature of the outdoor unit system are acquired.

At S22, an absolute value of the difference value between the average exhaust temperature of each of the outdoor units and the average exhaust temperature of the outdoor unit system is acquired according to the average exhaust temperature of each of the outdoor units and the average exhaust temperature of the outdoor unit system.

At S23, it is determined whether the absolute value reaches the preset value.

In this embodiment, before the action of comparing the average exhaust temperature of each of the outdoor units and the average exhaust temperature of the outdoor unit system, it is first determined whether the absolute value of the difference value between the average exhaust temperature of the outdoor unit and the average exhaust temperature of the outdoor unit system is within a preset range. When the average exhaust temperature of the outdoor unit system is not within the preset range, it indicates that the average exhaust temperature of the outdoor unit differs greatly from the average exhaust temperature of the outdoor unit system. At this time, it is necessary to perform troubleshooting first to detect whether the compressor of the outdoor unit has a fault. When the absolute value of the difference value between the average exhaust temperature of the compressor of the outdoor unit and the average exhaust temperature of the outdoor unit system is within the preset range, comparing the average exhaust temperature of the outdoor unit and the average exhaust temperature of the outdoor unit system is performed.

The preset range may be set according to a system requirement, and the preset range may allow the average exhaust temperature of each outdoor unit to have a fluctuation value in an upper/lower range of the average exhaust temperature of the outdoor unit system, to ensure the reliability of system control.

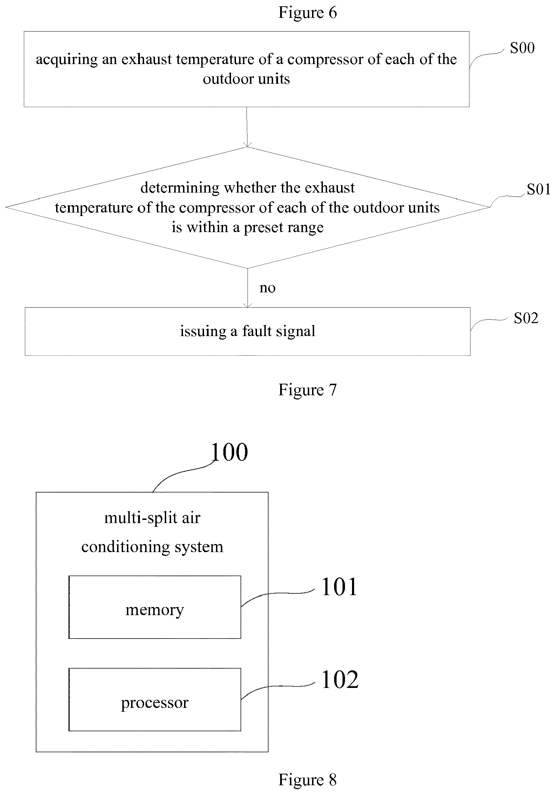

Further, as illustrated in Figure 7, in a sixth embodiment of a control method of a multi-split air conditioner according to the present disclosure, the method further includes follows.
At S00, an exhaust temperature of a compressor of each of the outdoor units is acquired.
At S01, it is determined whether the exhaust temperature of the compressor of each of the outdoor units is within a preset range.
At S02, when the exhaust temperature of the compressor of the outdoor unit exceeds the preset range, a fault signal is issued.

In this embodiment, the exhaust temperature of the compressor of each of the outdoor units is acquired. Further, it is determined whether the exhaust temperature of the compressor of each of the outdoor units is within the preset range, and when the exhaust temperature of the compressor exceeds the preset range, the fault signal is issued. The preset range is an exhaust temperature range of the compressor in a normal operating condition, and can be set according to an actual situation of the system.

By detecting whether the exhaust temperature of each compressor is within a normal preset range, and issuing a warning in time when the compressor has a fault, the compressor is protected from continuing to work in the event of a fault and causing further damage.

The present disclosure further provides a multi-split air conditioning system 100, as illustrated in Figs. 1 and 8, the multi-split air conditioning system includes an outdoor unit. The outdoor unit includes at least one compressor 10. The outdoor unit further includes a reversing valve 40, a gas-liquid separator 20, an outdoor heat exchanger 30, an electronic expansion valve, a high pressure shutoff valve 60, and a low pressure shutoff valve 70 connected on a pipeline of the outdoor unit. The reversing valve is a four-way valve. A connection manner of the outdoor unit pipeline is a conventional connection manner in the art, as shown in Figure 1, and thus details are not described herein again.

The multi-split air conditioning system 100 further includes a memory 101, a processor 102, and a control program of the multi-split air conditioner stored on the memory 101 and executable on the processor 102.When the control program of the multi-split air conditioner is executed by the processor 102, the steps of the method as described below are performed.

It is detected whether an overheat degree of the outdoor unit meets a target requirement.

When the overheat degree of the outdoor unit meets the target requirement, it is determined whether a difference value between an average exhaust temperature of the outdoor unit and an average exhaust temperature of the outdoor unit system reaches a preset value.

When the difference value between the average exhaust temperature of the outdoor unit and the average exhaust temperature of the outdoor unit system reaches the preset value, the average exhaust temperature of the outdoor unit is compared with the average exhaust temperature of the outdoor unit system.

Operating frequency of a compressor of the outdoor unit is reduced when the average exhaust temperature of the outdoor unit is greater than the average exhaust temperature of the outdoor unit system, and the operating frequency of the compressor of the outdoor unit is increased when the average exhaust temperature of the outdoor unit is less than the average exhaust temperature of the outdoor unit system.

In this embodiment, firstly, it is detected whether the overheat degree of the outdoor unit meets the target requirement to determine whether the compressor of the outdoor unit is in a normal operating state. When the overheat degree of the outdoor unit is greater than a target value, the too high overheat degree of the outdoor unit may be caused by different resistance of the pipeline through which the refrigerant flows or different loads of indoor units causing the compressor of the outdoor unit in an overloaded state. At this time, the flux of the refrigerant may be adjusted first to make the overheat degree of the outdoor unit meets the target value. Secondly, when the overheat degree of the outdoor unit is less than the target value, it may be due to the refrigerant flowing into the compressor in a gas-liquid two-phase state, causing damage to the compressor. Therefore, the flux of the refrigerant for the compressor may be firstly reduced, to prevent the refrigerant from flowing into the compressor in the gas-liquid two-phase state and causing damage to the entire system. Only when the overheat degree of the outdoor unit meets the target requirement, the next step is continued. Otherwise, the overheat degree of the compressor may be adjusted first to make it meet the target requirement.

When the overheat degree of the outdoor unit meets the target requirement, it is further determined whether the difference value between the average exhaust temperature of the outdoor unit and the average exhaust temperature of the outdoor unit system reaches the preset value. The preset value may be set as needed. When the difference value between the average exhaust temperature of the outdoor unit and the average exhaust temperature of the outdoor unit system is less than the preset value, it indicates that the average exhaust temperature of the outdoor unit at this time is not much different from the average exhaust temperature of the outdoor unit system, and is within an acceptable fluctuation range, then it is not necessary to adjust the operation of the outdoor unit at this time. However, when the difference value between the average exhaust temperature of the outdoor unit and the average exhaust temperature of the outdoor unit system exceeds the preset value, it indicates that the average exhaust temperature of the outdoor unit at this time is deviated too much from the average exhaust temperature of the outdoor unit system, and it may affect normal operation of the outdoor unit, so measures need to be taken to adjust its exhaust temperature to make the average exhaust temperature of the outdoor unit approaching the average exhaust temperature of the outdoor unit system.

It is further determined whether the average exhaust temperature of each of the outdoor units is greater than the average exhaust temperature of the outdoor unit system. It should be noted that, determining whether the average exhaust temperature of each of the outdoor units is greater than the average exhaust temperature of the outdoor unit system is to separately compare the average exhaust temperature of each outdoor unit with the average exhaust temperature of the outdoor unit system, and the determination for each outdoor unit is independent.

The average exhaust temperature of each of the outdoor units is an average value of exhaust temperatures of compressors inside each of the outdoor units. For example, there are three outdoor units, and the average exhaust temperatures of the three outdoor units are set to be TP1, TP2, and TP3, each outdoor unit includes two compressors, and the exhaust temperatures of the compressors are TP1C1, TP1C2, TP2C1, TP2C2, TP3C1, and TP3C2, respectively, then the average exhaust temperatures of the three outdoor units are TP1=(TP1C1+TP1C2)/2, TP2=(TP2C1+TP2C2)/2, and TP3=(TP3C1+TP3C2)/2. The average exhaust temperature of the outdoor unit system is an average value of the average exhaust temperatures of the three outdoor units. The average exhaust temperature of the outdoor unit system is set as TP, then TP=(TP1+TP2+TP3)/3.

Further, when the average exhaust temperature of the outdoor unit is greater than the average exhaust temperature of the entire outdoor unit system, it indicates that this outdoor unit has less refrigerant at this time, and then the exhaust temperature of the compressor in the outdoor unit can be reduced by reducing the operating frequency of the compressor at this time.

It should be noted that when the number of outdoor units is one or multiple, specific control methods are as follows.

When the number of the outdoor units is one, and the number of compressors inside the outdoor unit is multiple, the average exhaust temperature of the outdoor unit is equal to the average exhaust temperature of the outdoor unit system. At this time, an average exhaust temperature of the compressors of the outdoor unit can be directly determined, and the exhaust temperature of each compressor can be compared with the average exhaust temperature of the compressors. When the exhaust temperature of the compressor is greater than the average exhaust temperature, the operating frequency of the compressor is reduced to decrease the exhaust temperature of the compressor. When the exhaust temperature of the compressor is less than the average exhaust temperature of the compressors, the operating frequency of the compressor is increased to increase the operating temperature of the compressor.

When the number of the outdoor units is multiple, the multiple outdoor units constitute the outdoor unit system at this time. Then the average exhaust temperature of each of the outdoor units is compared with the average exhaust temperature of the outdoor unit system first. When an average exhaust temperature of a certain outdoor unit is greater than the average exhaust temperature of the entire outdoor unit system, operating frequencies of all of the compressors of the outdoor unit is controlled to be reduced. When an average exhaust temperature of a certain outdoor unit is less than the average exhaust temperature of the entire outdoor unit system, the operating frequencies of all of the compressors of the outdoor unit is controlled to be increased.

When the average exhaust temperature of the outdoor unit is less than the average exhaust temperature of the entire outdoor unit system, it indicates that the outdoor unit has more refrigerant at this time, and then the exhaust temperature of the compressor in the outdoor unit can be increased by increasing the operating frequency of the compressor.

In this embodiment, by detecting whether the overheat degree of an outdoor unit meets the target requirement, when the overheat degree of the outdoor unit meets the target requirement, it is determined whether the difference value between the average exhaust temperature of the outdoor unit and the average exhaust temperature of the outdoor unit system reaches the preset value; when the difference value between the average exhaust temperature of the outdoor unit and the average exhaust temperature of the outdoor unit system reaches the preset value, the average exhaust temperature of the outdoor unit is compared with the average exhaust temperature of the outdoor unit system; when the average exhaust temperature of the outdoor unit is greater than the average exhaust temperature of the outdoor unit system, the operating frequency of the compressor of the outdoor unit is reduced; and when the average exhaust temperature of the outdoor unit is less than the average exhaust temperature of the outdoor unit system, the operating frequency of the compressor of the outdoor unit is increased. With the method of the embodiment, the problem of excessively high or excessively low exhaust temperature of the compressor of the outdoor unit in the multi-split air conditioner system due to uneven refrigerant distribution is resolved, and the reliability of the multi-split air conditioner system is improved.

Further, in one embodiment, when the control program of the multi-split air conditioner is executed by the processor 102, following method steps are performed.

When the average exhaust temperature of the outdoor unit is greater than the average exhaust temperature of the outdoor unit system, it is determined whether a current operating frequency of the compressor of the outdoor unit is greater than its minimum operating frequency.

When the current operating frequency of the compressor of the outdoor unit is greater than its minimum operating frequency, the operating frequency of the compressor of the outdoor unit is reduced.

In this embodiment, when the average exhaust temperature of the compressor of the outdoor unit is greater than the average exhaust temperature of the outdoor unit system, it is further determined whether the current operating frequency of the compressor of the outdoor unit is greater than its minimum operating frequency. When the current operating frequency of the compressor of the outdoor unit reaches its minimum operating frequency that can be reached, it indicates that the compressor of the outdoor unit can no longer reduce its operating frequency at this time. Therefore, it is possible to continue to control the operating frequency of the compressor to reduce only when the current operating frequency of the compressor of the outdoor unit has not reached the minimum operating frequency.

Therefore, when it is detected that the current operating frequency of the compressor of the outdoor unit has not reached the minimum operating frequency, the compressor of the outdoor unit is controlled to reduce the operating frequency from the current operating frequency, to reduce the exhaust temperature of the compressor.

In this embodiment, when the average exhaust temperature of the outdoor unit is greater than the average exhaust temperature of the outdoor unit system, it is determined whether the current operating frequency of the compressor of the outdoor unit is greater than its minimum operating frequency; when the current operating frequency of the compressor of the outdoor unit is greater than its minimum operating frequency, the operating frequency of the compressor of the outdoor unit is reduced. The accuracy of the controlling the operating frequency of the compressor of the outdoor unit is improved, and the entire system is also protected.

In another embodiment, after the action of determining whether the current operating frequency of the compressor of the outdoor unit is greater than its minimum operating frequency, the method further includes follows.

When the current operating frequency of the compressor of the outdoor unit is less than or equal to the minimum operating frequency of the compressor, it is determined whether an operating frequency of the compressor of the outdoor unit whose average exhaust temperature is less than the average exhaust temperature of the outdoor unit system is greater than a maximum operating frequency of the compressor of the outdoor unit whose average exhaust temperature is less than the average exhaust temperature of the outdoor unit system.

When the operating frequency of the compressor of the outdoor unit whose average exhaust temperature is less than the average exhaust temperature of the outdoor unit system is less than its maximum operating frequency, the operating frequency of the compressor of the outdoor unit is increased.

In this embodiment, when the current operating frequency of the compressor of the outdoor unit reaches its minimum operating frequency that can be reached, the compressor can no longer continue to reduce its operating frequency. At this time, the stability of the entire system can be controlled by changing the operating frequency of other compressors. In one embodiment, it can be determined whether the operating frequency of the compressor of the outdoor unit whose average exhaust temperature is less than or equal to the average exhaust temperature of the outdoor unit system is greater than its maximum operating frequency, the operating frequency of the compressor is increased when the operating frequency of this compressor is less than its maximum operating frequency.

Of course, it should be noted that when there are a plurality of compressors in the outdoor unit, when it is determined that the average exhaust temperature of the outdoor unit is less than or equal to the average exhaust temperature of the outdoor unit system, it is further determined the operating frequency of the compressors inside the outdoor unit. At this time, an arbitrary compressor may be selected for determination, or one of the plurality of compressors may be set to have priority for determination. When the operating frequency of the specified compressor is greater than its maximum operating frequency, determination is continued to be performed on the operating frequency of a next compressor, and so on.

In this embodiment, when the current operating frequency of the compressor of the outdoor unit is less than or equal to the minimum operating frequency of the compressor, the operating frequency of the current compressor cannot be directly controlled at this time, therefore, by switching to control the operating frequencies of other compressors with low exhaust temperature in this embodiment, the stability of the entire system is controlled and the adaptability of the control is improved.

Further, in one embodiment, when the control program of the multi-split air conditioner is executed by the processor 102, following method steps are performed.

When the average exhaust temperature of the outdoor unit is less than the average exhaust temperature of the outdoor unit system, it is determined whether the current operating frequency of the compressor of the outdoor unit is less than its maximum operating frequency;

When the current operating frequency of the compressor of the outdoor unit is less than its maximum operating frequency, the operating frequency of the compressor of the outdoor unit is increased.

In this embodiment, when the average exhaust temperature of the compressor of the outdoor unit is less than the average exhaust temperature of the outdoor unit system, it is further determined whether the current operating frequency of the compressor of the outdoor unit is less than its maximum operating frequency. When the current operating frequency of the compressor of the outdoor unit reaches its maximum operating frequency that can be reached, it indicates that the compressor of the outdoor unit can no longer increase its operating frequency. Therefore, it is possible to continue to control the operating frequency of the compressor to increase only when the current operating frequency of the compressor of the outdoor unit has not reached the maximum operating frequency.

Therefore, when it is detected that the current operating frequency of the compressor of the outdoor unit has not reached the maximum operating frequency, the compressor of the outdoor unit is controlled to increase the operating frequency from the current operating frequency, to increase its exhaust temperature.

In this embodiment, when the average exhaust temperature of the outdoor unit is less than the average exhaust temperature of the outdoor unit system, it is determined whether the current operating frequency of the compressor of the outdoor unit is less than its maximum operating frequency, when the current operating frequency of the compressor of the outdoor unit is less than its maximum operating frequency, the operating frequency of the compressor of the outdoor unit is increased. The accuracy of controlling the operating frequency of the compressor of the outdoor unit is improved, and the entire system is also protected.

In another embodiment, after the action of determining whether the current operating frequency of the compressor of the outdoor unit is less than its maximum operating frequency, the method further includes follows.

When the current operating frequency of the compressor of the outdoor unit is greater than or equal to its maximum operating frequency, it is determined whether an operating frequency of a compressor of the outdoor unit whose average exhaust temperature is greater than the average exhaust temperature of the outdoor unit system is greater than the minimum operating frequency.

When the operating frequency of the compressor of the outdoor unit whose average exhaust temperature is greater than the average exhaust temperature of the outdoor unit system is greater than its minimum operating frequency, the operating frequency of the compressor of the outdoor unit is reduced.

In this embodiment, when the current operating frequency of the compressor of the outdoor unit reaches its maximum operating frequency that can be reached, the compressor can no longer continue to increase its operating frequency. At this time, the stability of the entire system can be controlled by changing the operating frequencies of other compressors. In one embodiment, it can be determined whether the operating frequency of the compressor of the outdoor unit whose average exhaust temperature is greater than or equal to the average exhaust temperature of the outdoor unit system is greater than its minimum operating frequency. The operating frequency of the compressor is reduced when the operating frequency of the compressor is greater than its minimum operating frequency.

Further, in one embodiment, when the control program of the multi-split air conditioner is executed by the processor 102, following method steps are performed.

An exhaust temperature of each of the outdoor units is acquired.

A lowest exhaust temperature in all the outdoor units is acquired according to comparison of acquired exhaust temperatures.

It is detected whether the overheat degree of the outdoor unit corresponding to the lowest exhaust temperature meets the target requirement.

In this embodiment, by acquiring the exhaust temperature of each of the outdoor units, the lowest exhaust temperature among all exhaust temperatures is obtained according to the comparison of acquired exhaust temperatures, and then, it is determined whether the overheat degree of the outdoor unit corresponding to the lowest exhaust temperature meets the target requirement. When the overheat degree of the outdoor unit corresponding to the lowest exhaust temperature can meet the target requirement, it indicates that the overheat degree of the outdoor units corresponding to other exhaust temperatures that are greater than the lowest exhaust temperature can also meet the target requirement. Therefore, it is only necessary to determine whether the overheat degree of the outdoor unit corresponding to the lowest exhaust temperature meats the target requirement.

It should be noted that the above-mentioned acquiring the exhaust temperatures of each of the outdoor units refers to an average value of the exhaust temperatures of all compressors of each of the outdoor units, and the lowest exhaust temperature is acquired from the comparison of the exhaust temperatures of all the outdoor units.

In this embodiment, by acquiring the lowest exhaust temperature among the exhaust temperatures of all the outdoor units, and determining whether the overheat degree of the outdoor unit corresponding to the lowest exhaust temperature meets the target requirement, when the overheat degree of the outdoor unit corresponding to the lowest exhaust temperature meets the target requirement, it can be determined that the overheat degree of other outdoor units can meet the target requirement. It is not necessary to perform determination on the overheat degree of all the outdoor units, improving the operation efficiency.

Further, in one embodiment, when the control program of the multi-split air conditioner is executed by the processor 102, following method steps are performed.

Then average exhaust temperature of each of the outdoor units and the average exhaust temperature of the outdoor unit system are acquired.

An absolute value of the difference value between the average exhaust temperature of each of the outdoor units and the average exhaust temperature of the outdoor unit system is acquired according to the average exhaust temperature of each of the outdoor units and the average exhaust temperature of the outdoor unit system.

It is determined whether the absolute value reaches the preset value.

In this embodiment, before the action of comparing the average exhaust temperature of each of the outdoor units and the average exhaust temperature of the outdoor unit system, it is first determined whether the absolute value of the difference value between the average exhaust temperature of the outdoor unit and the average exhaust temperature of the outdoor unit system is within a preset range. When the average exhaust temperature of the outdoor unit system is not within the preset range, it indicates that the average exhaust temperature of the outdoor unit differs greatly from the average exhaust temperature of the outdoor unit system. At this time, it is necessary to perform troubleshooting first to detect whether the compressor of the outdoor unit has a fault. When the absolute value of the difference value between the average exhaust temperature of the compressor of the outdoor unit and the average exhaust temperature of the outdoor unit system is within the preset range, comparing the average exhaust temperature of the outdoor unit and the average exhaust temperature of the outdoor unit system is performed.

The preset range may be set according to a system requirement, and the preset range may allow the average exhaust temperature of each outdoor unit to have a fluctuation value in an upper/lower range of the average exhaust temperature of the outdoor unit system, to ensure the stability of system control.

Further, in other embodiments, when the control program of the multi-split air conditioner is executed by the processor 102, following method steps are performed.

An exhaust temperature of a compressor of each of the outdoor units is acquired.

It is determined whether the exhaust temperature of the compressor of each of the outdoor units is within a preset range.

When the exhaust temperature of the compressor of the outdoor unit exceeds the preset range, a fault signal is issued.

In this embodiment, the exhaust temperature of the compressor of each of the outdoor units is acquired. Further, it is determined whether the exhaust temperature of the compressor of each of the outdoor units is within the preset range, and when the exhaust temperature of the compressor exceeds the preset range, the fault signal is issued. The preset range is an exhaust temperature range of the compressor in a normal operating condition, and can be set according to an actual situation of the system.

By detecting whether the exhaust temperature of each compressor is within a normal preset range, and issuing a warning in time when the compressor has a fault, the compressor is protected from continuing to work in the event of a fault and causing further damage.

In addition, an embodiment of the present disclosure further provides a computer readable storage medium having a control program for a multi-split air conditioner stored thereon that, when executed by the processor 102, method steps as described in the above embodiments are performed.

The above embodiments are only preferred embodiments of the present disclosure, and are not intended to limit the scope of the disclosure, and the equivalent structure or equivalent process transformations made in light of the description of the present disclosure and the drawings are directly or indirectly applied to other related technical fields, and are also included in the scope of patent protection of the present disclosure.

## Claims

1. A control method of a multi-split air conditioner, wherein, the multi-split air conditioner comprises an outdoor unit, the outdoor unit comprises at least one compressor, and the control method of the multi-split air conditioner comprises steps of:
detecting whether an overheat degree of the outdoor unit meets a target requirement;
when the overheat degree of the outdoor unit meets the target requirement, determining whether a difference value between an average exhaust temperature of the outdoor unit and an average exhaust temperature of an outdoor unit system reaches a preset value;
when the difference value between the average exhaust temperature of the outdoor unit and the average exhaust temperature of the outdoor unit system reaches the preset value, comparing the average exhaust temperature of the outdoor unit with the average exhaust temperature of the outdoor unit system;
reducing an operating frequency of a compressor of the outdoor unit when the average exhaust temperature of the outdoor unit is greater than the average exhaust temperature of the outdoor unit system, and increasing the operating frequency of the compressor of the outdoor unit when the average exhaust temperature of the outdoor unit is less than the average exhaust temperature of the outdoor unit system.

2. The control method of a multi-split air conditioner according to claim 1, wherein reducing the operating frequency of the compressor of the outdoor unit when the average exhaust temperature of the outdoor unit is greater than the average exhaust temperature of the outdoor unit system comprises:
when the average exhaust temperature of the outdoor unit is greater than the average exhaust temperature of the outdoor unit system, determining whether a current operating frequency of the compressor of the outdoor unit is greater than a minimum operating frequency of the compressor of the outdoor unit;
when the current operating frequency of the compressor of the outdoor unit is greater than the minimum operating frequency, reducing the operating frequency of the compressor of the outdoor unit.

3. The control method of a multi-split air conditioner according to claim 2, wherein after determining whether the current operating frequency of the compressor of the outdoor unit is greater than the minimum operating frequency of the compressor of the outdoor unit, the control method further comprises:
when the current operating frequency of the compressor of the outdoor unit is less than or equal to the minimum operating frequency of the compressor, determining whether an operating frequency of the compressor of the outdoor unit with an average exhaust temperature less than the average exhaust temperature of the outdoor unit system is greater than a maximum operating frequency of the compressor of the outdoor unit with an average exhaust temperature less than the average exhaust temperature of the outdoor unit system;
when the operating frequency of the compressor of the outdoor unit with an average exhaust temperature less than the average exhaust temperature of the outdoor unit system is less than the maximum operating frequency, increasing the operating frequency of the compressor of the outdoor unit.

4. The control method of a multi-split air conditioner according to claim 1, wherein increasing the operating frequency of the compressor of the outdoor unit when the average exhaust temperature of the outdoor unit is less than the average exhaust temperature of the outdoor unit system comprises:
when the average exhaust temperature of the outdoor unit is less than the average exhaust temperature of the outdoor unit system, determining whether a current operating frequency of the compressor of the outdoor unit is less than a maximum operating frequency of the compressor of the outdoor unit;
when the current operating frequency of the compressor of the outdoor unit is less than the maximum operating frequency, increasing the operating frequency of the compressor of the outdoor unit.

5. The control method of a multi-split air conditioner according to claim 4, wherein, after determining whether the current operating frequency of the compressor of the outdoor unit is less than the maximum operating frequency of the compressor of the outdoor unit, the control method further comprises:
when the current operating frequency of the compressor of the outdoor unit is greater than or equal to the maximum operating frequency, determining whether an operating frequency of a compressor of the outdoor unit with an average exhaust temperature greater than the average exhaust temperature of the outdoor unit system is greater than a minimum operating frequency of the compressor of the outdoor unit with an average exhaust temperature greater than the average exhaust temperature of the outdoor unit system;
when the operating frequency of the compressor of the outdoor unit with an average exhaust temperature greater than the average exhaust temperature of the outdoor unit system is greater than the minimum operating frequency, reducing the operating frequency of the compressor of the outdoor unit.

6. The control method of a multi-split air conditioner according to any of claims 1-5, wherein detecting whether the overheat degree of the outdoor unit meets the target requirement comprises:
acquiring an exhaust temperature of the outdoor unit;
acquiring a lowest exhaust temperature in the outdoor units according to comparison of acquired exhaust temperatures;
detecting whether the overheat degree of the outdoor unit with the lowest exhaust temperature meets the target requirement.

7. The control method of a multi-split air conditioner according to any of claims 1-5, wherein determining whether the difference value between the average exhaust temperature of the outdoor unit and the average exhaust temperature of the outdoor unit system reaches the preset value comprises:
acquiring the average exhaust temperature of the outdoor unit and the average exhaust temperature of the outdoor unit system;
acquiring an absolute value of the difference value between the average exhaust temperature of the outdoor unit and the average exhaust temperature of the outdoor unit system according to the average exhaust temperature of the outdoor unit and the average exhaust temperature of the outdoor unit system;
determining whether the absolute value reaches the preset value.

8. The control method of a multi-split air conditioner according to any of claims 1-5, further comprising:
acquiring an exhaust temperature of a compressor of the outdoor unit;
determining whether the exhaust temperature of the compressor of the outdoor unit is within a preset range;
when the exhaust temperature of the compressor of the outdoor unit exceeds the preset range, issuing a fault signal.

9. A multi-split air conditioning system, wherein, the multi-split air conditioning system comprises an outdoor unit, the outdoor unit comprises at least one compressor; the outdoor unit further comprises a reversing valve, an outdoor heat exchanger, a gas-liquid separator, an electronic expansion valve, a high pressure shutoff valve, and a low pressure shutoff valve, all of which are connected on a pipeline of the outdoor unit; and the multi-split air conditioning system further comprises: a memory, a processor, and a control program of a multi-split air conditioner stored on the memory and executable on the processor, which when executed by the processor, performs the steps of the control method of the multi-split air conditioner according to any of claims 1-8.

10. A computer readable storage medium, wherein, the computer readable storage medium has a control program of a multi-split air conditioner stored thereon, and the control program of the multi-split air conditioner, when executed by the processor, performs the steps of the control method of the multi-split air conditioner according to any of claims 1-8.
